# EUROPEAN PATENT APPLICATION

(11) **EP 1 843 310 A1**
(43) Date of publication of application: **10.10.2007**
(21) Application number: 06007049.7
(22) Date of filing: 03.04.2006
(51) Int. Cl.: G09B 29/00

(54) **Method, storage medium and system for displaying city furnishing objects**

(71) Applicant: Harman Becker Automotive Systems GmbH, 76307 Karlsbad (DE)
(72) Inventor: Strassenburg-Kleciak, Marek, 20535 Hamburg (DE); Meyer, Hendrik, 22307 Hamburg (DE)
(74) Representative: Bertsch, Florian Oliver

(57) **Abstract**

A system for displaying city furnishing objects on an electronic map comprises a storage unit (2) containing object data (3) and element type data (4), a working memory unit (5), a processing unit (6) and an optical output unit (7) having a display (8). The object data (3) comprise object position data and element type identifying data for identifying an element type of an object, and the element type data (4) comprise graphical representation data for at least one element type. A control signal is generated by the processing unit (6) based on both the object data (3) and the element type data (4), and is output to the optical output unit (7) in order to effect an object to be displayed by creating an instance of an object having an element type specified by the element type identifying data at a position specified by the object position data.

## Description

### Background of the present invention

The present invention relates to electronic maps, in particular to electronic maps employed for navigation purposes, e.g., in a navigation device. More specifically, the present invention relates to a method, a storage medium and a system for displaying city furnishing objects on an electronic map.

Electronic maps are widely used, e.g., in city planning and for navigation purposes. Since electronic maps may be displayed on screens of small and/or portable devices, they have the advantage of being versatile and compact. Further, data displayed on electronic maps may be easily modified and adapted, e.g., by changing the scale of the map portion displayed, by displaying additional objects that might be of relevance to the user, e.g., directional arrows indicating a direction change in a navigation device, or by highlighting objects that may be of relevance to the user. In this respect, three-dimensional (3D) maps are particularly appealing since they have a high recognition quality, i.e., the recognition of an environmental region, such as a street intersection, is facilitated by the 3D map as compared to a conventional two-dimensional representation.

In such 3D maps or 3D city models, houses and roads are now conventionally displayed. However, an additional increase in recognition quality could be achieved by including more elements into the electronic map. Such static elements of a city that facilitate recognition quality include, but are not limited to, vegetation, traffic signs, traffic lights, telephone boxes, street lighting or public transportation stops and will, in the following, summarizingly be referred to as objects of city furnishing. While displaying city furnishing objects in a 3D city model or a 3D electronic map increases the recognition quality, problems related to data storage and data storage capacities frequently arise. In particular, in many 3D city models, objects are stored in the form of vector graphics data formats or other graphical data formats. This results in large amounts of data to be stored if city furnishing objects are to be displayed, the data amounts easily exceeding the storage capacity available in portable devices, such as navigation devices.

Therefore, there exists a need in the art for providing an improved method and system for displaying objects on an electronic map. In particular, there exists a need for an improved method and system for displaying city furnishing objects on an electronic map, in which method and system data storage and/or data management are made more efficient.

### Summary of the invention

According to the present invention, this need is addressed by a method of displaying city furnishing objects on an electronic map according to claim 1, a storage medium according to claim 12, a system for displaying city furnishing objects on an electronic map according to claim 17, and a navigation device according to claim 23. The dependent claims define preferred or advantageous embodiments of the invention.

A method of displaying city furnishing objects on an electronic map according to the present invention comprises the steps of providing object data for a plurality of city furnishing objects, the object data comprising object position data and element type identifying data, providing element type data for a plurality of element types, the element type data comprising graphical representation data, determining an element type of an object based on the element type identifying data of the object, and displaying the object based on the element type data corresponding to the determined element type and based on object data of the object. According to this method, graphical representation data no longer need to be stored for individual objects to be displayed, but rather are stored in a central data base or element type library which comprises element type data for a plurality of element types. For each object to be displayed, the element type identifying data associated with the object allows the corresponding element type to be identified and to thus generate a graphical representation of the object on the electronic map based on the element type identifying data, the object position data, and the graphical representation data of the identified element type. Preferably, in the step of displaying the object, an instance of an element having the determined element type is created at a position determined in dependence on object position data of the object to be displayed.

It should be noted that the term "city furnishing object" as used herein refers to all static objects or elements of a city other than houses and roads, that may be useful to increase recognition quality of an electronic map when displayed thereon. These city furnishing objects are classified according to their element type. Further, it should be noted that the term "graphical representation data" as used herein refers to all data that define the general shape of an object, i.e., data that allows a graphical representation of the element to be generated when processed by an appropriate system. In particular, the term "graphical representation data" is not limited to a specific data format for graphical data, but is intended to describe all such possible formats.

In an embodiment, the element type identifying data is an element type identifier, e.g., in the form of an element label or an element type number. However, in a preferred embodiment, the element type identifying data comprises both an element type identifier and an element subtype identifier, the latter also being determined in the method for displaying the object. By classifying objects to be displayed according to their element type and a subtype of this element type, a larger variety of elements may be displayed.

For example, an element type "vegetation" may have several subtypes corresponding to different tree species.

If an element type has one subtype or several subtypes, the element type data may comprise graphical representation data for at least one subtype of the element type, and the object is displayed based on the graphical representation data corresponding to the element type and the element subtype of the object. In particular, in one embodiment, the graphical representation data of an element subtype may comprise all data required for displaying an element having this subtype. In this case, the object may be directly and easily displayed based on the graphical representation data of the subtype. In another embodiment, the graphical representation data of the element subtype only allows a sub-portion of the graphical representation of the object to be reproduced, such that the graphical representation data of the element subtype has to be combined with the graphical representation data of the corresponding element type in order to create a graphical representation of an object having this element type and element subtype. For example, the element type data for an element type "traffic signs" may comprise a set of basic graphical representation data for a generic traffic sign, while the graphical representation data for each subtype of this element type only specifies data or text to be displayed on the traffic sign, e.g., a speed limit "50 km/h". In this way, the storage capacity required for storing the element type and element subtype graphical representation data may be reduced.

In yet another embodiment, if an element type has one subtype or several subtypes, the element type data comprises subtype modification data for at least one subtype of this element type, which subtype modification data may be used for modifying the graphical representation data of the corresponding element type. Therefore, the subtype modification data is not a graphical representation data that by itself allows a graphical representation of this element subtype to be generated, but rather represents a rule for modifying the graphical representation data of the corresponding element type. In this case, the object is displayed based on graphical representation data corresponding to the determined element type, subtype modification data corresponding to the determined subtype and object data, such as object position data, of the object. In this embodiment, it is no longer necessary to separately provide graphical representation data for subtypes. Since subtype modification data typically require less storage capacity than the corresponding graphical representation data, in this embodiment, storage capacity requirements are further reduced.

The subtype modification data and the graphical representation data of the superordinate element type may have various forms. For example, the subtype modification data may comprise a scaling factor, and the graphical representation data of the superordinate element type may be an object that has two components, the relative size of which is modified according to the scaling factor comprised by the subtype modification data. In another example, the graphical representation data may correspond to a graphical representation defining a field for a text string or an alphanumerical string, and the subtype modification data may comprise an alphanumerical string or a text string that is to be inserted into the graphical representation corresponding to the superordinate element type. Naturally, the various examples for different subtype modification data and corresponding graphical representation data may be combined in a single method. For example, subtype modification data in the form of scaling factors may be employed for the element type "vegetation", where a graphical representation data of the element type defines a generic tree shape, while one or several scaling factors associated with a specific subtype define a ratio of a tree crown diameter to a tree total height and/or of a tree trunk diameter to a tree total height. In the same method, subtype modification data in the form of alphanumerical strings may be employed for the element type "traffic signs", where the graphical representation data of the element type corresponds to a generic traffic sign shape, while the alphanumerical strings corresponding to various subtypes define content to be displayed on the traffic sign.

As already indicated above, city furnishing objects may correspond to a wide variety of different objects. In an embodiment, different element types are selected from a group comprising traffic signs, traffic lights, telephone boxes, street lighting and public transportation stops. In a preferred embodiment, the group further comprises vegetation. The multitude of different element types allows a large variety of different city furnishing objects to be displayed on the electronic map, thus increasing recognition quality.

The object data may further comprise object size data which is also taken into account for displaying the object. In this case, objects are displayed according to this real size rather than a generic size only, thus further increasing recognition quality.

Preferably, the electronic map is a three-dimensional map, and the graphical representation data of element types and/or element subtypes correspond to three-dimensional objects. However, it should be noted that the present invention is not limited to three-dimensional maps and three-dimensional objects, but is equally applicable to two-dimensional maps. The electronic map and, more specifically, the object to be displayed may be displayed on the screen of a navigation device.

A storage medium according to the present invention is a storage medium having stored thereon element type data for a plurality of element types, the element type data comprising graphical representation data, and subtype modification data for at least one subtype of a given element type, the subtype modification data comprising information for modifying the graphical representation data of the given element type. As already explained above, the subtype modification data is data that defines a rule for modifying the graphical representation data of the superordinate element type, such as to arrive at a graphical representation of an object having the given element type and the corresponding element subtype by combining the graphical representation data of the element type and the subtype modification data of the subtype. Since such subtype modification data typically require less storage capacity than graphical representation data, this leads to a decrease in the data amount to be stored on the storage medium. Therefore, for a given storage capacity, the storage medium according to the present invention allows data corresponding to a larger class of element types and element subtypes to be stored thereon as compared to a conventional storage medium.

As already explained above, the subtype modification data may, e.g., comprise a scaling factor or an alphanumerical string determining a relative size of different components in a graphical representation of the element type, or the content of a text field, respectively. Again, different types of subtype modification data may be combined on a single storage medium, either for different element types or even for one element type.

Again, the element type data may be selected from a group comprising traffic signs, traffic lights, telephone boxes, street lighting and public transportation stops. Preferably, the group further comprises vegetation.

In a preferred embodiment, the storage medium further as stored thereon object data for a plurality of city furnishing objects, the object data comprising object position data and element type identifying data.
Preferably, the object data further comprise object size data. A storage medium having stored thereon both element type data and object data has the advantage of allowing city furnishing objects to be displayed without having to access a separate data base.

A system for displaying city furnishing objects on an electronic map according to the present invention comprises a first storage unit containing object data for a plurality of city furnishing objects, the object data comprising object position data and element type identifying data, a second storage unit containing element type data for a plurality of element types, the element type data comprising graphical representation data, and a processing unit determining an element type of an object to be displayed based on element type identifying data of the object, and outputting a control signal in dependence on object data of the object and graphical representation data corresponding to the determined element type. Since graphical representation data are stored for various element types in the second storage unit while the object data only comprise element type identifying data rather than graphical representation data for each individual object, for a given total storage capacity, this system allows a larger number of city furnishing objects to be displayed.

In the system, the first and second storage unit may be a single device, e.g., a CD-ROM, CD-RW, a DVD, a hard disk of a navigation system or a storage card, such as an SD-card. Alternatively, the first and second storage units may also be separate devices.

Preferably, the system further comprises an optical output unit receiving the control signal from the processing unit and displaying the object based on the control signal. The optical output unit may, e.g., comprise a display of a navigation device.

In a preferred embodiment, the element type identifying data for an object contained in the first storage unit comprise an element type identifier and an element subtype identifier, and the processing unit outputs the control signal in dependence on both the element type identifier and the element subtype identifier. By classifying objects according to both an element type and an element subtype, a wider variety of different objects may be displayed.

If objects are classified according to an element type and an element subtype, the element type data contained in the second storage unit also comprises data related to one or several subtypes of at least one element type. The data related to an element subtype may be in the form of graphical representation data for the element subtype. Alternatively, the element type data may comprise subtype modification data for at least one subtype of an element type, wherein the subtype modification data corresponds to a rule for modifying a graphical representation data of the superordinate element type. In particular, in the latter case, the second storage unit preferably comprises a storage medium according to the present invention. If subtype modification data are provided, the amount of data to be stored in the second storage unit is particularly small.

Again, the different element types may be selected from a group comprising traffic signs, traffic lights, telephone boxes, street lighting and public transportation stops. Preferably, the group further comprises vegetation.

A navigation device according to the present invention comprises a system for displaying an object according to the present invention, a position-determining means providing vehicle position data to the system, and an optical output unit receiving the control signal from the system and displaying the object based on the control signal. Preferably, the control signal that is output by the processing unit of the system is further based on the vehicle position data received from the position-determining means. In this navigation device, city furnishing objects may be displayed by the optical output unit, thus increasing recognition quality of the electronic map displayed by the navigation device in order to guide a driver. Further, since the position-determining means determines a vehicle position and provides the vehicle-position data to the system for displaying an object, a portion of the electronic map displayed by the optical output unit may be automatically selected based on the vehicle position data. In particular, a portion of the map may be selected so as to correspond to the field of view of the driver of a vehicle.

The method, storage medium and system according to the present invention allow city furnishing objects to be incorporated into three-dimensional electronic maps or three-dimensional city models, while providing efficient data storage and data management.

The main field of application of the present invention will be electronic maps and devices displaying the same, in particular navigation devices.

### Brief description of the drawings

Additional features and advantages of the present invention will become more readily appreciated from the following detailed description of preferred or advantageous embodiments with reference to the accompanying drawings.
Fig. 1 shows a schematic block diagram of a system for displaying city furnishing objects on an electronic map according to an embodiment of the present invention.
Fig. 2 shows a schematic illustration of a three-dimensional electronic map generated using a method according to an embodiment of the present invention.
Fig. 3 shows a schematic illustration of a two-dimensional electronic map generated using a method according to an embodiment of the present invention.
Fig. 4 schematically illustrates stored object data according to an embodiment of the present invention.
Fig. 5 schematically illustrates stored element type data according to an embodiment of the present invention.
Fig. 6 schematically illustrates stored element type data according to another embodiment of the present invention.
Fig. 7 shows a flow chart representing a method for displaying an object according to an embodiment of the invention.
Fig. 8 schematically illustrates the generation of a graphical representation of an element subtype based on element subtype modification data according to an embodiment of the invention.

### Description of preferred embodiments

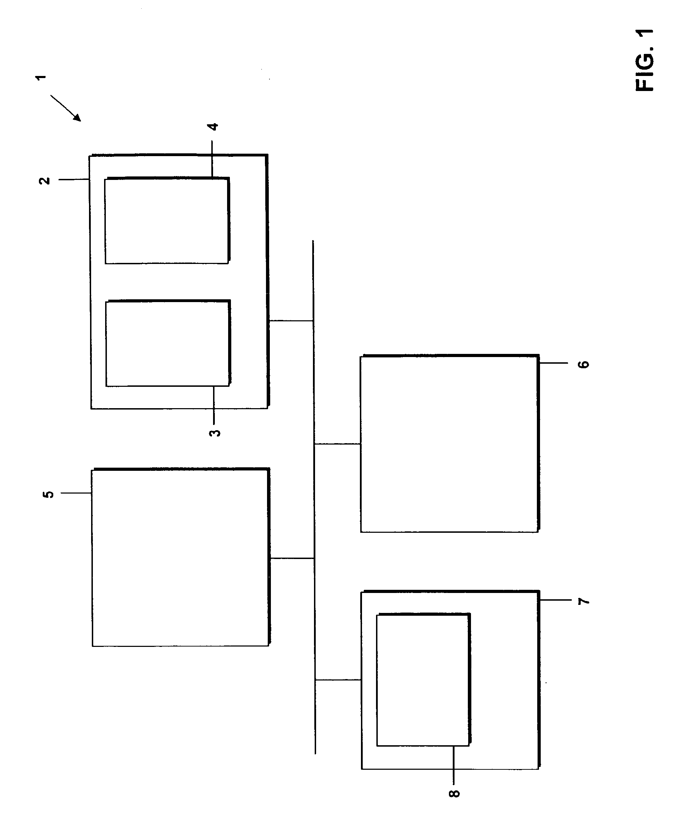

First, with reference to Fig. 1, a system 1 for displaying city furnishing objects on an electronic map will be explained. The system 1 is designed to perform the method for displaying city furnishing objects on an electronic map according to the present invention and comprises a storage unit 2, a working memory unit 5, a processing unit 6, and an optical output unit 7. The optical output unit 7 comprises a display 8.

The storage unit 2, which may be, e.g., a CD-ROM, a DVD or the hard disk of a navigation device, has stored thereon object data and element type data, schematically represented at 3 and 4, respectively. As will be explained in more detail below, the object data comprise object position data and element type identifying data, the object position data specifying a position of the object to be displayed, e.g., in the form of Cartesian coordinates x and y, while the element type identifying data allow an element type of the object to be determined. Importantly, at least for some of the objects to be displayed, the object data does not include the full graphical representation data that, by itself, contains all shape information related to the object. By contrast, the element type data, schematically indicated at 4, comprise graphical representation data for a plurality of element types, the graphical representation data for a given element type being such as to allow an instance of an object having this given element type to be created once the corresponding position and, possibly, size of the object have been specified. The element type data 4 acts as an element type library. Thus, in the system 1, objects are displayed by combining information provided by the object data 3 and the element type data 4.

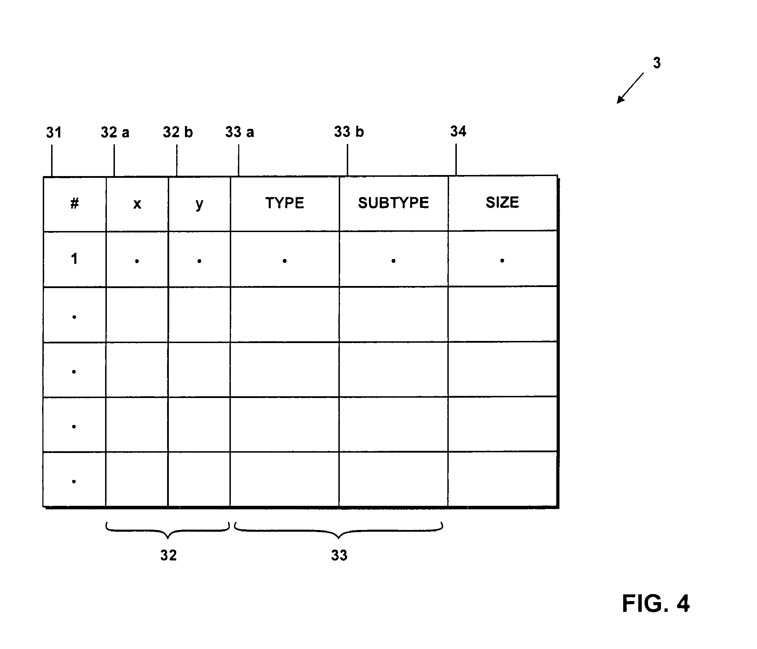

In order to display city furnishing objects, a subset of object data and all or a subset of element type data are read from the storage unit 2 and temporarily stored in a working memory unit 5 which, e.g., may also be the internal memory of the processing unit 6. The subset of object data to be temporarily stored in the working memory unit 5 will typically be selected based on the portion of the map that is to be displayed or into which city furnishing objects are to be incorporated. I.e., the subset of object data is selected based on the object position data of the respective objects and coordinates of the portion of the map to be displayed. Next, element type identifying data of an object to be displayed is read by the processing unit 6, and a control signal is output to the optical output unit 7 in order to create an instance of this element type at a position specified by the object position data of the object to be displayed. As will be explained more fully with reference to Figs. 4-8 below, outputting the control signal may also be more complex in the sense that graphical representation data corresponding to the determined element type may be modified in dependence on additional parameters comprised by the object data of the object to be displayed, such as to allow a wider variety of city furnishing objects to be displayed. For example, the object data may comprise object size data based on which the size of the created instance is adjusted.

Again, it should be noted that the control signal output by the processing unit 6 to the optical output unit 7 is generated based on both the object data of the object to be displayed and the element type data. Therefore, since graphical representation data no longer need to be stored for each individual object of city furnishing to be displayed, but graphical representation data only are stored for a plurality of generic element types, in the present system, storage space requirements are reduced.

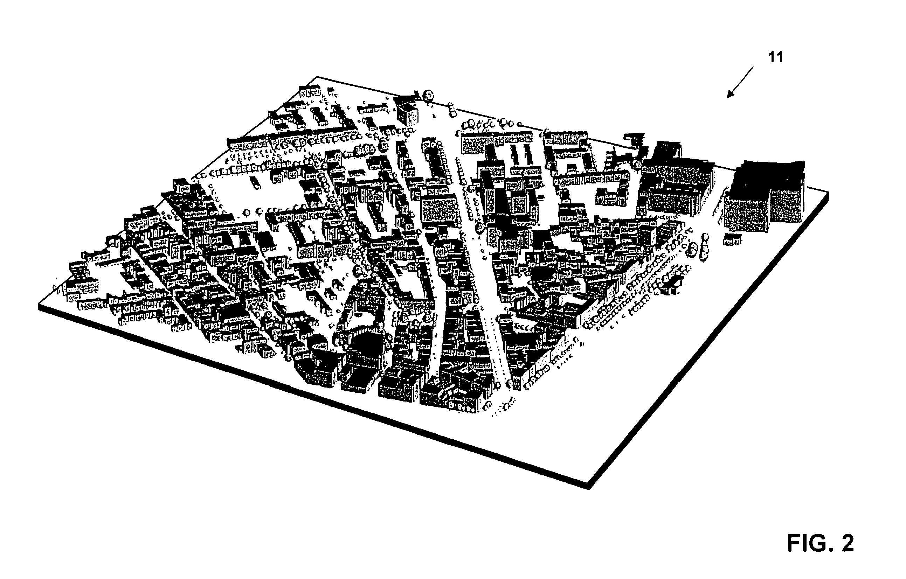

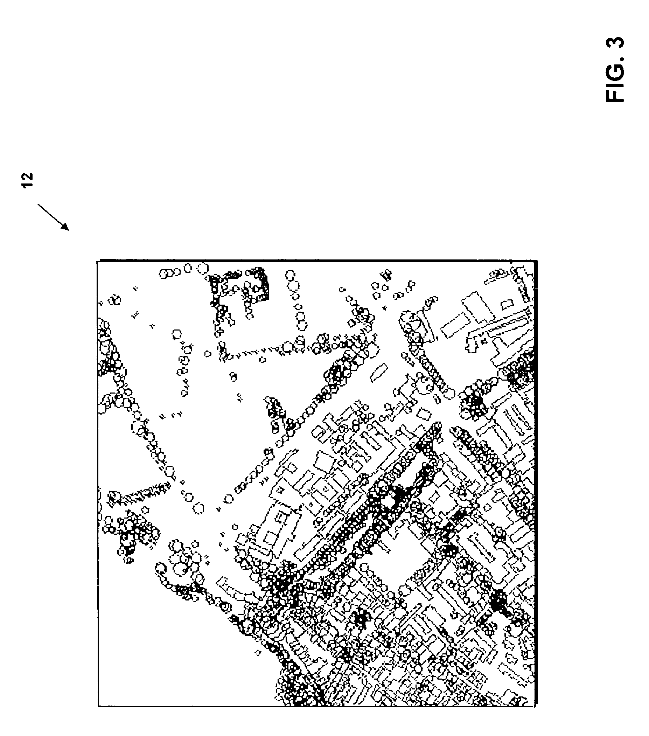

Figs. 2 and 3 schematically illustrated a three-dimensional and a two-dimensional electronic map, respectively, into which city furnishing objects in the form of vegetation have been included in addition to buildings displayed. In Fig. 2, a three-dimensional generic representation for vegetation has been employed, which graphical representation of vegetation comprises a trunk and a close to spherical crown. However, as may be seen from Fig. 2, both the total size of each city furnishing object and the relative size of the crown as compared to the total size may be adjusted individually for each object displayed.

While three-dimensional electronic maps are the preferred field of application of the present invention, the present invention is not limited thereto. Rather, as schematically illustrated for a two-dimensional electronic map 12 shown in Fig. 3, city furnishing objects, such as vegetation, may also be incorporated into two-dimensional maps, where, in the example show, each tree and each shrub is represented by a circle in the map 12.

Next, with reference to Fig. 4, a data structure for the object data 3 according to an embodiment of the present invention will be explained. In the exemplary embodiment shown, the object data 3 is provided in the form of a data array having a plurality of columns 31-34, in which the first column 31 identifies an object by a simple numerical identifier, the second and third columns 32a and 32b, respectively, contain Cartesian coordinates of the objects, the columns 33a and 33b specify an element type and an element subtype of the object, respectively, and the column 34 specifies an object size. For an object, the data entries in columns 32a and 32b specifying the position of the object are object position data, while the entries in the columns 33a and 33b specifying an element type and subtype, respectively, are element type identifying data. It should be noted that, of course, the first column 31 labeling different objects does not necessarily need to be provided since objects can also be identified according to their position. Further, while not shown in this figure, additional data entries may be provided that specify, e.g., the size or relative size of different components for a specific object. Different element types may be selected, e.g., from vegetation, traffic signs, traffic lights, telephone boxes, street lighting and public transportation stops. Each of these element types may, but does not need to be subdivided into one or several element subtypes. For example, the element type "vegetation" may have various subtypes corresponding to different tree or shrub species, such as Tilia, Quercus, Acer and Robinia. Similarly, the element type "traffic signs" may have various subtypes, such as stop signs, yield signs, and various speed limit signs.

It should be noted that object data relating to city furnishing objects, as schematically illustrated in Fig. 4, is typically not contained in the map data employed for current navigation devices. However, object data as indicated in Fig. 4 may be automatically generated, e.g., from cadastral maps. In cadastral maps, city furnishing objects are frequently stored in the form of vector graphics data, e.g., with trees and shrubs represented by circles. These cadastral maps, that are typically available in electronic form, may be analyzed using image recognition software in order to infer object positions and object sizes for vegetation objects. Further, city garden and parks departments frequently have available in electronic form data related to vegetation planted along roads, this data frequently even including the species of the vegetation planted. Therefore, the element subtype for various objects may be inferred from this data. Similarly, information specifying the position and type of traffic signs and of street lighting is frequently available from road construction offices.

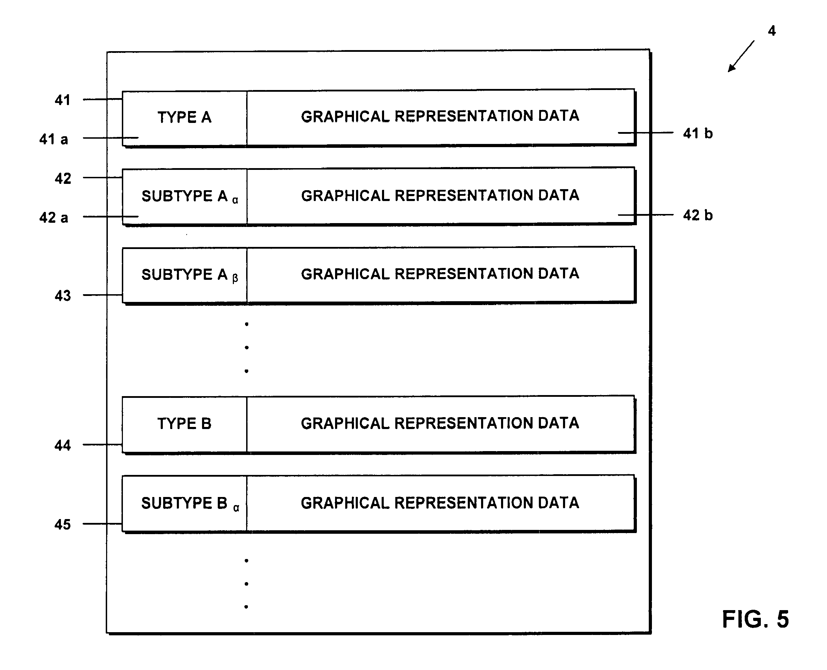

Next, with reference to Fig. 5, the storage of element type data according to an exemplary embodiment of the invention will be explained. As schematically indicated, an element type A has element subtypes A_{α} and A_{β}. Similarly, an element type B has an element subtype B_{α}. The element type data comprise graphical representation data for each element type and element subtype, respectively. As already indicated above, the term "graphical representation data" refers to data that specifies the geometrical shape of the element to be displayed, without being restricted to a specific data format. In particular, the graphical representation data may, e.g., correspond to vector graphics data, polygon shapes or spherical shapes, possibly supplemented by texture information, or may have any other suitable form. Data 41-45 for each element type and element subtype, respectively, comprises graphical representation data 41b or 42b, supplemented by an identifying field, e.g., 41a or 42a, that allows a correspondence to be established between an element type or an element subtype and the corresponding graphical representation data.

For example, if element type A represents "vegetation", the graphical representation data 41b may describe the graphical representation of a generic tree having a cylindrical trunk and a spherical crown. The graphical representation data of the various subtypes may, e.g., describe variants thereof, e.g., trees having oval crowns or trees having triangularly-shaped crowns. If no element subtype is specified for an object to be displayed, the graphical representation data of the specified element type will be used for displaying the object, i.e., an instance of the corresponding element type will be created. By contrast, if an element subtype is specified, the graphical representation data of the subtype will be employed.

Again, it should be emphasized that objects are displayed by combining object data and element type data. More specifically, the graphical representation data, e.g., 41b or 42b in Fig. 5, will typically be supplemented with an object size information of the object to be displayed before an instance of the corresponding element type or element subtype having the specified size will be created at the position specified by the object data.

In the element type data exemplified in Fig. 5, graphical representation data is provided for various subtypes. Although this may be suitable in a case in which the graphical representation of a subtype or of various subtypes is strongly different from the one of the superordinate element type, in cases in which the geometrical representation of a subtype may be derived in a simple manner from the one of the corresponding superordinate element type, there are more efficient ways of storing element type and element subtype data, as will be explained next.

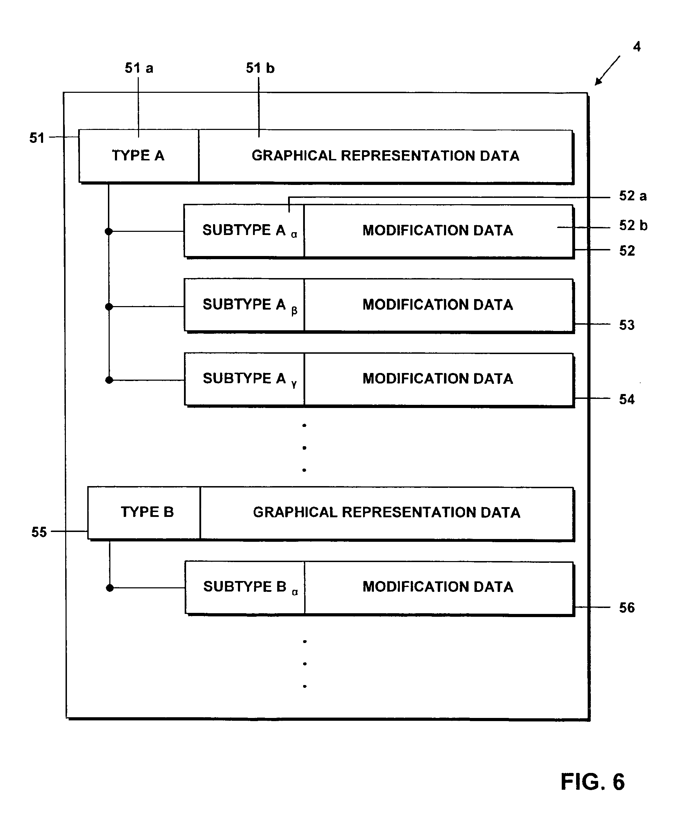

In the element type data exemplified in Fig. 6, an element type A has subtypes A_{α}, A_{β} and Aγ, respectively, and an element type B has a subtype B_{α}. It will be assumed that both for element type A and for element type B, the graphical representation of the corresponding subtypes is easily derivable from the graphical representation of the superordinate element type, e.g., by scaling various components of the graphical representation of the element type, or by inserting a text string into this graphical representation. In this case, as schematically indicated, the data related to element type A comprises an identifier field 51a and graphical representation data 51b. However, as indicated at 52-54, the data related to the various subtypes does not comprise a separate set of graphical representation data for the subtypes, but only subtype modification data, as exemplified at 52b. The subtype modification data provide a rule for modifying the graphical representation data of the superordinate element type.

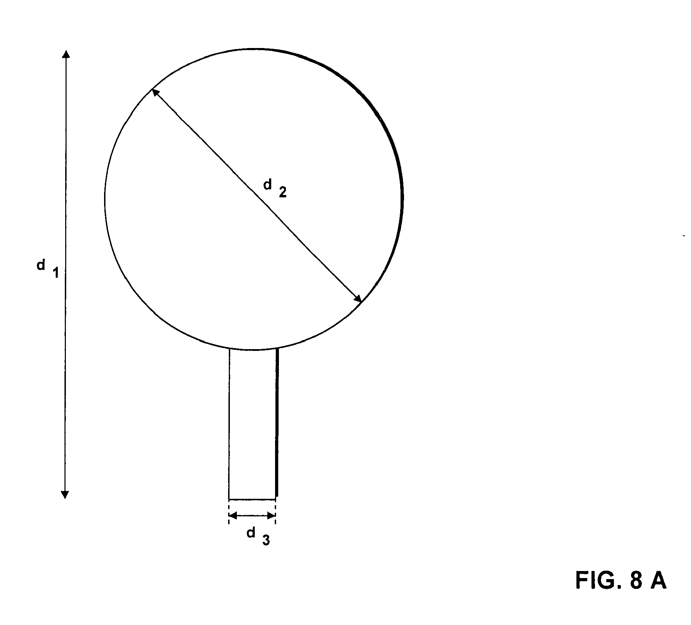

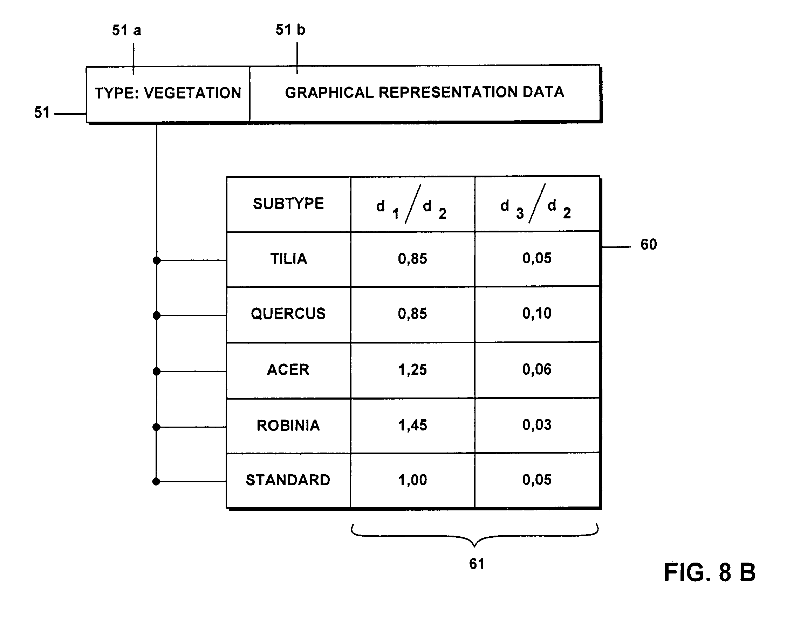

For illustration, the subtype modification data will be further explained with reference to Fig. 8. Taking the element type "vegetation" as an example, the graphical representation data of this element may be such as to specify a generic vegetation shape, e.g., in the form shown in Fig. 8A, the vegetation shape having a cylindrical tree trunk and a spherical tree crown. In this example, the shape of the object displayed is determined by three parameters, namely the total height d₁, the crown diameter d₂, and the trunk diameter d₃. For trees belonging to one of various tree or shrub species, the ratio of these parameters is approximately equal. Therefore, as schematically indicated in Fig. 8B, the subtype modification data of the element type vegetation may comprise numerical values determining the ratios d1/d2 and d3/d2, respectively. These subtype modification data may be provided, e.g., for various tree species, such as Tilia, Quercus, Acer and Robinia. Further, an additional subtype "standard" may be specified to apply to all objects for which none of the other subtypes has been specified. When combined with the graphical representation data of the superordinate element type "vegetation", this subtype modification data in the form of the two ratios d1 /d2 and d3/d2 defines the general geometrical shape of a tree having the subtype. Therefore, when supplemented by the object size data stored in the object data, as schematically illustrated in Fig. 4, the graphical representation data of the element type, the subtype modification data, and the object position data allow an instance of an element subtype to be created at a position determined by the object data.

As is evident from the above, if element subtypes are specified by subtype modification data, the graphical representation data of the superordinate element type will typically not be directly displayed. Rather, the graphical representation data of the element type will first be modified according to the rules provided by the corresponding subtype modification data.

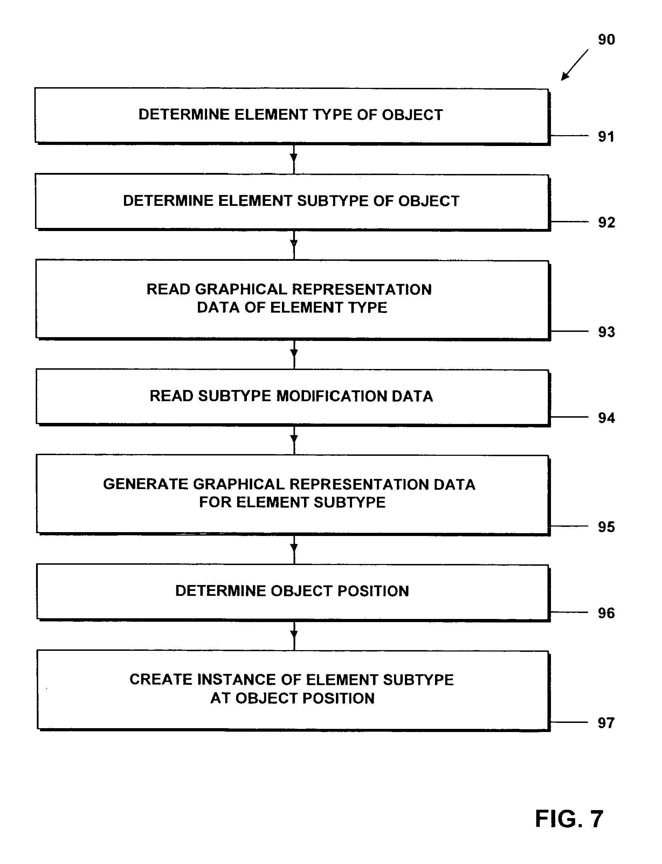

Next, with reference to Fig. 7, an exemplary method for displaying an object will be explained for a case in which the object has an element subtype that is specified in terms of subtype modification data, as indicated in Fig. 6 for subtypes A_{α}, A_{β}, A_{γ}, and B_{α}, and the corresponding data 52, 53, 54 and 56, respectively. The method is generally indicated at 90. First, at steps 91 and 92, the element type and element subtype of the object to be displayed are determined, respectively. Then, at step 93, the graphical representation data corresponding to the determined element type are read, e.g., by storing them in the working memory unit 5. At step 94, the subtype modification data corresponding to the determined subtype are read. Subsequently, at step 95, from the graphical representation data of the element type and the subtype modification data, graphical representation data corresponding to the element subtype are generated. For the example indicated in Fig. 8, at step 95, the graphical representation data of the generic element type "vegetation" are modified by incorporating thereinto the relative dimensions of the tree crown and tree trunk as compared to the tree height, respectively, these parameters being specified by the corresponding subtype. Thereafter, at step 96, an object position and object size are determined, and an instance of the element subtype is created at the object position at step 97. Naturally, rather than separately generating graphical representation data at step 95 before creating an instance at step 97, steps 95 and 97 may be combined into a single step.

It is to be understood that the above explanation as regards subtype modification data with reference to Fig. 8 is illustrative only, and subtype modification data may have a wide variety of different forms. For example, subtype modification data may consist in or comprise an alphanumerical string that is to be incorporated into a graphical representation of the superordinate element type, which may be useful, e.g., in the case of traffic signs. Alternatively, the subtype modification data may also comprise a graphical representation of a sub-portion of the element type to be displayed. For example, for the element type "public transportation stops", the subtype modification data may comprise data allowing a graphical representation of a stop sign to be generated, which stop sign specifies whether a public transportation stop is a stop for buses, underground, or regional trains, this graphical representation of the stop sign being insertable into a graphical representation of a generic public transportation stop as defined by the graphical representation data of the superordinate element type.

It is to be understood that, while subtype modification data may have various forms, these various forms may be combined in a single storage unit. In particular, for a given element type and element subtype, the form of subtype modification data will be chosen such as to allow the amount of data to be stored to be minimized. Further, as already mentioned above, data storage in the form of subtype modification data, as indicated in Fig. 6, does not need to be applied to all element types. Rather, the two different forms of element type data storage schematically represented in Figs. 5 and 6, respectively, may be intercombined in a single storage unit.

As should be evident from the above, the provision of separate object data and element type data in combination with the versatility of choosing the most appropriate format for element type data storage allows storage space requirements to be reduced. A yet further advantage of the methods and systems described herein results from the fact that the system and method may be easily adapted to different target systems. In particular, since graphical representation data are stored centrally in the element type data, i.e., an element type library, the representation of all objects displayed may be readily changed by modifying the element type data only. For example, by appropriately modifying the element type data, the methods and systems described herein are equally applicable to recursive geometric models, polygon structures using alpha channel textures, spherical structures etc. Modifications of the element type data directly influence all instances of the corresponding elements.

Summarizingly, the methods and systems according to the present invention allow city furnishing objects to be displayed on an electronic map, thus improving recognition quality, while storage space requirements are kept within reasonable bounds thanks to an improved data storage and data management.

## Claims

1. A method of displaying city furnishing objects on an electronic map (11, 12),
comprising the steps of
- providing object data for a plurality of city furnishing objects, the object data comprising object position data (32) and element type identifying data (33),
- providing element type data for at least one element type, the element type data comprising graphical representation data (41b, 51 b),
- determining an element type of an object based on the element type identifying data of said object, and
- displaying said object based on the element type data corresponding to the determined element type and on object data of said object.

2. The method according to claim 1,
wherein
said step of displaying said object comprises a step of creating an instance of an element having said determined element type at a position determined in dependence on object position data (32) of said object.

3. The method according to claim 1 or claim 2,
wherein
said element type identifying data (33) comprise an element type identifier and an element subtype identifier,
the method further comprising the step of determining a subtype of said object based on the element type identifying data.

4. The method according to claim 3,
wherein
the element type data, for an element type, comprise graphical representation data (42b) for at least one subtype of said element type, and said object is displayed based on graphical representation data corresponding to said determined subtype (42b) and said object data of said object.

5. The method according to claim 3,
wherein
the element type data, for an element type, comprise subtype modification data (52b; 61) for at least one subtype of said element type, and
said object is displayed based on graphical representation data (51b) corresponding to said determined element type, subtype modification data (52b; 61) corresponding to said determined subtype, and said object data of said object, wherein the graphical representation data (51b) is modified in dependence on the subtype modification data (52b; 61).

6. The method according to claim 5,
wherein
said subtype modification data (61) comprise a scaling factor, and
the graphical representation data (51 b) of said determined element type is modified based on said scaling factor (61) such as to modify a relative size of two components in a graphical representation of said determined element type.

7. The method according to claim 5 or claim 6,
wherein
said subtype modification data comprise an alphanumerical string, and the graphical representation data of said determined element type is modified based on said alphanumerical string such as to incorporate said alphanumerical string into a graphical representation of said determined element type.

8. The method according to any one of the preceding claims,
wherein
said element type data comprise information related to at least one of traffic signs, traffic lights, telephone boxes, street lighting, public transportation stops, or vegetation.

9. The method according to any one of the preceding claims,
wherein
said object data further comprise object size data (34), the step of displaying said object further being based on object size data of said object.

10. The method according to any one of the preceding claims,
wherein
said electronic map is a three-dimensional map (11) and said graphical representation data represent a three-dimensional object.

11. The method according to any one of the preceding claims,
wherein
said object is displayed on the screen (8) of a navigation device.

12. A storage medium containing data for displaying city furnishing objects on an electronic map,
having stored thereon
- element type data (4) for at least one element type, the element type data comprising graphical representation data (51 b), and
- subtype modification data (52b; 61) for at least one subtype of a given element type,
wherein said subtype modification data (52b; 61) comprise information for modifying the graphical representation data (51b) of said given element type.

13. The storage medium according to claim 12,
wherein
said subtype modification data (61) comprise a scaling factor, and
said graphical representation data correspond to a graphical representation of said given element type which has at least two distinct components, the relative size of which is determined by said scaling factor.

14. The storage medium according to claim 12 or 13,
wherein
said subtype modification data comprise an alphanumerical string, and
said graphical representation data correspond to a graphical representation of said given element type defining a text field, the content of which is determined by said alphanumerical string.

15. The storage medium according to any one of claims 12-14,
wherein
said element type data comprise information related to at least one of traffic signs, traffic lights, telephone boxes, street lighting, public transportation stops, or vegetation.

16. The storage medium according to any one of claims 12-15,
further having stored thereon object data (3) for a plurality of city furnishing objects, the object data comprising object position data (32) and element type identifying data (33).

17. A system for displaying city furnishing objects on an electronic map, comprising
- a first storage unit (2) containing object data (3) for a plurality of city furnishing objects, the object data comprising object position data (32) and element type identifying data (33),
- a second storage unit (2) containing element type data (4) for at least one element type, the element type data comprising graphical representation data (41b, 42b; 51b), and
- a processing unit (6) determining an element type of an object based on element type identifying data (33) of said object, and outputting a control signal in dependence on object data of said object and graphical representation data (41b, 42b; 51b) corresponding to the determined element type.

18. The system according to claim 17,
comprising
- an optical output unit (7,8) receiving said control signal from said processing unit (6) and displaying said object based on said control signal.

19. The system according to claim 17 or claim 18,
wherein,
for an object, said element type identifying data (33) contained in said first storage unit comprise an element type identifier (33a) and an element subtype identifier (33b), and
said processing unit (6) outputs said control signal in dependence on both the element type identifier (33a) and the element subtype identifier (33b).

20. The system according to any one of claims 17-19,
wherein,
for an element type, the element type data (4) contained in said second storage unit (2) comprise graphical representation data (42b) for at least one subtype of said element type.

21. The system according to any one of claims 17-20,
wherein
said second storage unit comprises a storage medium according to any one of claims 13-18.

22. The system according to any one of claims 17-21,
wherein
said element type data comprise information related to at least one of traffic signs, traffic lights, telephone boxes, street lighting, public transportation stops or vegetation.

23. A navigation device,
comprising
- a system (1) according to any one of claims 17-22,
- a position determining means providing vehicle position data to said system, and
- an optical output unit (7, 8) receiving said control signal from said system and displaying said object based on said control signal.

24. The navigation device according to claim 23,
wherein
said processing unit (6) outputs said control signal further based on said vehicle position data.
